# EUROPEAN PATENT APPLICATION

(11) **EP 4 726 635 A1**
(43) Date of publication of application: **15.04.2026**
(21) Application number: 24818534.0
(22) Date of filing: 29.05.2024
(51) Int. Cl.: G06Q 30/0601

(54) **LINE-OF-CREDIT PROCESSING METHOD AND APPARATUS, AND COMPUTER DEVICE AND COMPUTER PROGRAM PRODUCT**

(30) Priority: 06.06.2023 CN 202310664700
(71) Applicant: Shenzhen TCL New Technology Co., Ltd., Shenzhen, Guangdong 518052 (CN)
(72) Inventor: DONG, Chen, Shenzhen, Guangdong 518052 (CN)
(74) Representative: Herrero & Asociados, S.L.
(86) International application number: PCT/CN2024/095974
(87) International publication number: WO 2024/251001

(57) **Abstract**

Provided is a line-of-credit processing method. The method comprises: acquiring biological feature information of an object; performing identity recognition according to the biological feature information, so as to obtain identity information; according to the identity information, extracting an initial line-of-credit of the object for a device (S203); according to the identity information, acquiring historical consumption data of the object for the device (S204); and performing fusion processing on the historical consumption data and the initial line-of-credit, so as to generate a line-of-credit for the object (S205). Therefore, the generation efficiency and the generation accuracy of a line-of-credit are improved.

## Description

This application claims priority to Chinese Patent Applications No. 202310664700.X, filed on June 6, 2023 and entitled "CREDIT LINE PROCESSING METHOD AND RELATED EQUIPMENT". The entire disclosures of the above application are incorporated herein by reference.

### TECHNICAL FIELD

The present application relates to the technical field of credit-limit allocation, and specifically relates to a credit-limit processing method, an apparatus, a computer device, and a computer program product.

### BACKGROUND TECHNOLOGY

When a user shops through a device such as a smart television, the user may shop by using the user's credit limit. Specifically, when the user shops through the device, the user performs remote control through a remote controller so that the device allocates a corresponding credit limit to the user.

### Technical Problem

However, this manner of allocating a credit limit to the user requires manual operation by the user, resulting in low allocation efficiency. Further, this manner of allocating a credit limit to the user may involve a situation in which multiple people operate the remote controller, making it impossible to accurately allocate the credit limit to the correct user.

In summary, the current problem is that the efficiency of generating a user's credit limit is low and the accuracy of generation is inadequate.

### SUMMARY OF INVENTION

The embodiments of the present application provide a credit-limit processing method, an apparatus, a computer device, a computer-readable storage medium, and a computer program product, which are capable of improving the generation efficiency and generation accuracy of a user's credit limit.

A credit-limit processing method includes:

Obtaining biometric information of an object for which a credit limit is to be generated by a device.

Performing identity recognition on the object according to the biometric information to obtain identity information of the object.

Extracting an initial credit limit of the object for the device according to the identity information.

Obtaining historical consumption data of the object for the device according to the identity information.

Performing a fusion processing on the historical consumption data and the initial credit limit to generate a credit limit of the object.

Accordingly, the embodiments of the present application provide a credit-limit processing apparatus, comprising:

A first acquiring unit, which can be used to obtain biometric information of an object for which a credit limit is to be generated by a device.

An identification unit, which can be used to perform identity recognition on the object according to the biometric information to obtain identity information of the object.

An extraction unit, which can be used to extract an initial credit limit of the object for the device according to the identity information.

A second acquiring unit, which can be used to obtain historical consumption data of the object for the device according to the identity information.

A fusion unit, which can be used to perform a fusion processing on the historical consumption data and the initial credit limit to generate a credit limit of the object.

In some embodiments, the extraction unit may be specifically used to obtain a credit-limit level of the object according to the identity information; and to extract an initial credit limit corresponding to the credit-limit level so as to obtain the initial credit limit of the object for the device.

In some embodiments, the extraction unit may be specifically used to determine whether the identity information matches preset information in a cloud; if matching, extracting a preset credit-limit level corresponding to the preset information; and determining the preset credit-limit level as the credit-limit level of the object.

In some embodiments, the extraction unit may be specifically used to send, through a credit-limit processing server, a credit-level query request to a data cache area corresponding to the credit-limit processing server, the credit-level query request carrying the identity information; and to query the credit-limit level of the object in the data cache area based on the identity information in the credit-level query request so as to obtain the credit-limit level of the object.

In some embodiments, the extraction unit may be specifically used to query, in the data cache area, the credit-limit level of the object based on the identity information in the credit-level query request; and if the credit-limit level of the object is not found in the data cache area, to request the credit-limit level of the object from a cloud through the credit-limit processing server.

In some embodiments, the extraction unit may be specifically used to extract target consumption data of the object within a preset time period from a memory database corresponding to the credit-limit processing server through the credit-limit processing server; and to request the credit-limit level of the object from a cloud based on the target consumption data.

In some embodiments, the second acquiring unit may be specifically used to determine whether the initial credit limit is less than a preset credit threshold; and if so, to obtain historical consumption data of the object for the device according to the identity information.

In some embodiments, the fusion unit may be specifically used to obtain a mapping function for the historical consumption data; to perform a mapping processing on the historical consumption data according to the mapping function to obtain a credit-limit parameter of the object; and to perform a fusion operation on the credit-limit parameter and the initial credit limit to obtain the credit limit of the object.

In addition, the embodiments of the present application further provide a computer device, comprising a memory and a processor; the memory stores a computer program, and the processor is used to run the computer program in the memory to execute any of the credit-limit processing methods provided in the embodiments of the present application.

In addition, the embodiments of the present application further provide a computer-readable storage medium, wherein the computer-readable storage medium stores a computer program, and the computer program is adapted to be loaded by a processor to execute any of the credit-limit processing methods provided in the embodiments of the present application.

In addition, the embodiments of the present application further provide a computer program product, comprising a computer program, wherein the computer program, when executed by a processor, implements any of the credit-limit processing methods provided in the embodiments of the present application.

### Beneficial Effects

The present application can obtain biometric information of an object for which a credit limit is to be generated by a device, perform identity recognition on the object according to the biometric information to obtain identity information of the object, extract an initial credit limit of the object for the device according to the identity information, obtain historical consumption data of the object for the device according to the identity information, and perform a fusion processing on the historical consumption data and the initial credit limit to generate a credit limit of the object. Since the present application can identify the identity information of the object based on the biometric information of the object, the historical consumption data and the initial credit limit of the object can be obtained based on the identity information, such that a credit limit for the object can be accurately and automatically generated based on the historical consumption data and the initial credit limit, thereby improving the generation efficiency and the generation accuracy of the user's credit limit.

### BRIEF DESCRIPTION OF THE DRAWINGS

In order to more clearly illustrate technical solutions in embodiments of the present application, accompanying drawings required for describing the embodiments are briefly introduced below. Apparently, the drawings described below are only some embodiments of the present application. For those skilled in the art, other drawings can be obtained based on these drawings without creative efforts.
FIG. 1 is a schematic diagram of a scenario of the credit-limit processing method provided in the embodiments of the present application.
FIG. 2 is a first schematic diagram of a flow of the credit-limit processing method provided in the embodiments of the present application.
FIG. 3 is a schematic diagram of related equipment adopted by the credit-limit processing method provided in the embodiments of the present application.
FIG. 4 is a second schematic diagram of a flow of the credit-limit processing method provided in the embodiments of the present application.
FIG. 5 is a structural schematic diagram of the credit-limit processing apparatus provided in the embodiments of the present application.
FIG. 6 is a structural schematic diagram of the computer device provided in the embodiments of the present application.

### DETAILED DESCRIPTION OF THE EMBODIMENTS

Below, the technical solutions in the embodiments of the present application will be clearly and completely described in conjunction with the accompanying drawings in the embodiments of the present application. It is obvious that the described embodiments are only part of the embodiments of the present application, rather than all of the embodiments. All other embodiments obtained by those skilled in the art based on the embodiments of the present application without creative efforts shall fall within the scope of protection of the present application.

The embodiments of the present application provide a credit-limit processing method, an apparatus, a computer device, a computer-readable storage medium, and a computer program product. Among them, the credit-limit processing apparatus may be integrated in the computer device, and the computer device may be a server or a terminal device.

The server may be an independent physical server, or may be a server cluster or a distributed system composed of multiple physical servers, and may also be a cloud server that provides basic cloud-computing services such as cloud services, cloud databases, cloud computing, cloud functions, cloud storage, network services, cloud communications, middleware services, domain-name services, security services, network acceleration services (content delivery network, CDN), and big-data and artificial-intelligence platforms. The terminal may be a smart phone, a tablet computer, a laptop computer, a desktop computer, a smart speaker, a smart watch, etc., but is not limited thereto. The terminal and the server may be directly or indirectly connected through wired or wireless communication methods, which is not limited in the present application.

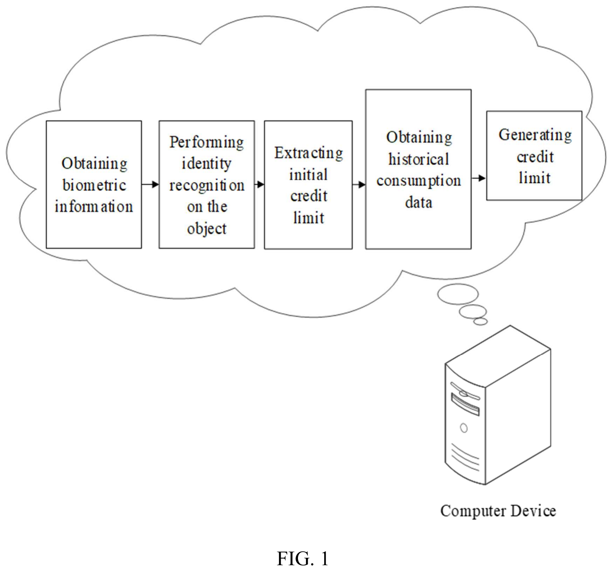

For example, referring to Figure 1, taking the credit-limit processing apparatus integrated in the computer device as an example, the computer device may obtain biometric information of an object for which a credit limit is to be generated by the device, perform identity recognition on the object according to the biometric information to obtain identity information of the object, extract an initial credit limit of the object for the device according to the identity information, obtain historical consumption data of the object for the device according to the identity information, and perform a fusion processing on the historical consumption data and the initial credit limit to generate a credit limit of the object.

The biometric information may refer to information of the biometric feature of the object.

The initial credit limit may refer to a credit limit preliminarily set for the object.

The historical consumption data may refer to consumption data of the object within a historical period of time.

The device may refer to the aforementioned computer device.

The following will provide detailed explanations, respectively. It should be noted that the order of description of the following embodiments is not intended to limit the preferred order of the embodiments.

In this embodiment, the description is provided from the perspective of the credit-limit processing apparatus. The credit-limit processing apparatus may be integrated in a computer device, and the computer device may be a server or a terminal device. The terminal may include a tablet computer, a laptop computer, and a personal computer (PC), a wearable device, a virtual reality device, or other intelligent devices capable of acquiring data.

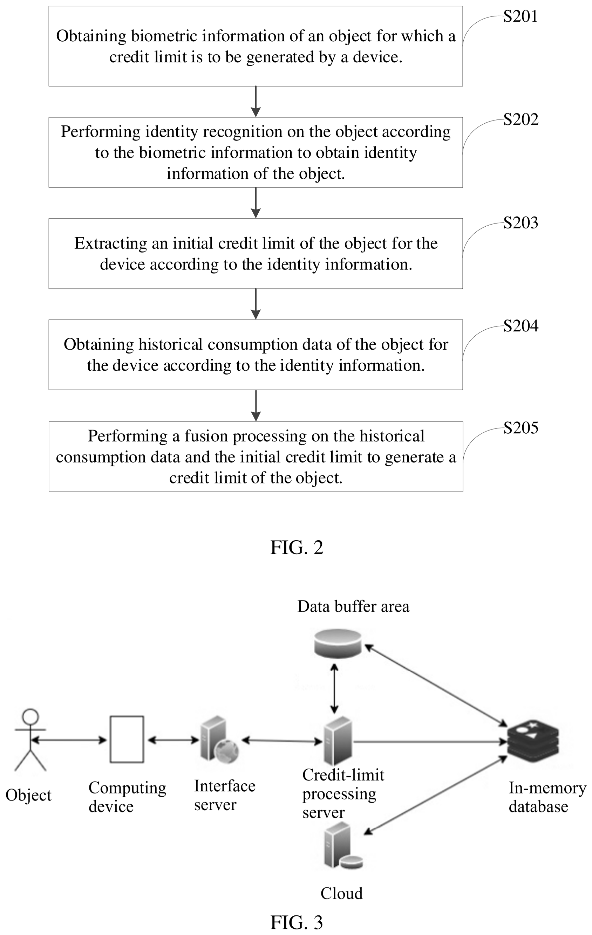

As shown in FIG. 2, the specific flow of the credit-limit processing method includes steps S201 to S205:
S201, obtaining biometric information of an object for which a credit limit is to be generated by a device.

S202, performing identity recognition on the object according to the biometric information to obtain identity information of the object.

S203, extracting an initial credit limit of the object for the device according to the identity information.

S204, obtaining historical consumption data of the object for the device according to the identity information.

S205, performing a fusion processing on the historical consumption data and the initial credit limit to generate a credit limit of the object.

The present application can obtain biometric information of an object for which a credit limit is to be generated by a device, perform identity recognition on the object according to the biometric information to obtain identity information of the object, extract an initial credit limit of the object for the device according to the identity information, obtain historical consumption data of the object for the device according to the identity information, and perform a fusion processing on the historical consumption data and the initial credit limit to generate a credit limit of the object. Since the present application can identify the identity information of the object based on the biometric information of the object, the historical consumption data and the initial credit limit of the object can be obtained based on the identity information, such that a credit limit can be accurately and automatically generated for the object based on the historical consumption data and the initial credit limit, thereby improving the generation efficiency and the generation accuracy of the user's credit limit.

According to the method described in the above embodiments, further detailed explanation will be provided below.

In this embodiment, the credit-limit processing apparatus is specifically integrated in a computer device, and the computer device is a server.

As shown in FIG. 2, the specific flow of the credit-limit processing method includes steps S201 to S205:

S201, obtaining biometric information of an object for which a credit limit is to be generated by a device.

The object may refer to a user.

The biometric information may include, but is not limited to, at least one of a voice of the object, a fingerprint of the object, or a face of the object. In the embodiments of the present application, the biometric information may preferably be the voice of the object.

In some embodiments of the present application, the manner of obtaining the biometric information of an object for which a credit limit is to be generated by the device may be: obtaining the biometric information of the object for which a credit limit is to be generated by the device through a biometric-information acquiring device connected to the device.

When the biometric information is the voice of the object, the biometric-information acquiring device is a voice acquiring device, when the biometric information is the fingerprint of the object, the biometric-information acquiring device is a fingerprint acquiring device, and when the biometric information is the face of the object, the biometric-information acquiring device is an imaging device.

S202, performing identity recognition on the object according to the biometric information to obtain identity information of the object.

In some embodiments of the present application, in step S202, the manner of performing identity recognition on the object according to the biometric information of the object to obtain the identity information of the object may be: matching the biometric information with preset biometric information, and if matching, taking preset identity information corresponding to the preset biometric information as the identity information of the object.

The preset biometric information may refer to biometric information of the object that is preset in advance.

In one example, when the biometric information is the same as the preset biometric information, such a situation may be referred to as the biometric information matching the preset biometric information. When the biometric information is different from the preset biometric information, such a situation may be referred to as the biometric information not matching the preset biometric information.

In one example, when a similarity between the biometric information and the preset biometric information is greater than a preset similarity threshold, such a situation may be referred to as the biometric information matching the preset biometric information, when the similarity between the biometric information and the preset biometric information is less than or equal to the preset similarity threshold, such a situation may be referred to as the biometric information not matching the preset biometric information.

In one embodiment of the present application, the manner of performing identity recognition on the object according to the biometric information to obtain the identity information of the object may be: using an identity recognition model to perform identity recognition on the object according to the biometric information to obtain the identity information of the object.

The identity recognition model may be a CNN neural network model, or may be a self-attention neural network model, and so on.

S203, extracting an initial credit limit of the object for the device according to the identity information.

In some embodiments of the present application, the manner of extracting the initial credit limit of the object for the device according to the identity information may be: obtaining a credit-limit level of the object according to the identity information, and extracting an initial credit limit corresponding to the credit-limit level so as to obtain the initial credit limit of the object for the device.

For example, the manner of obtaining the credit-limit level of the object according to the identity information may be: obtaining a correspondence relationship between the identity information and the credit-limit level, obtaining a credit-limit level corresponding to the identity information according to the identity information and the correspondence relationship, and taking the credit-limit level corresponding to the identity information as the credit-limit level of the object.

For example, the manner of extracting the initial credit limit corresponding to the credit-limit level so as to obtain the initial credit limit of the object for the device may be: extracting a preset limit value corresponding to the credit-limit level, and performing a mapping processing on the preset limit value by using a mapping rule to obtain the initial credit limit corresponding to the credit-limit level so as to obtain the initial credit limit of the object for the device.

The mapping rule may refer to a rule for performing a mapping processing on the preset limit value, and the mapping rule may specifically be represented as a function or may be represented as a table.

The mapping rule may be: initial credit limit = preset limit value × 30%.

For example, the initial credit limit and the credit-limit level may have a one-to-one corresponding relationship. Based on this, the initial credit limit corresponding to the credit-limit level may be extracted through the corresponding relationship between the initial credit limit and the credit-limit level.

The credit-limit level may refer to a level of the initial credit limit corresponding to the object.

Here, the explanation is made with a specific example. For example, when the object is user A, the computer device obtains that the credit-limit level of user A is level 2. Then, the computer device may extract the preset limit value corresponding to level 2 of the credit-limit level according to the corresponding relationship between the credit-limit level and the preset limit value, and the preset limit value corresponding to level 2 for user A is 100. Then, the computer device may perform a mapping processing on the preset limit value 100 by using the mapping rule, to obtain the value 70, and the value 70 is the initial credit limit of user A.

For example, the manner of obtaining the credit-limit level of the object according to the identity information may be: determining whether the identity information matches preset information in the cloud; if matching, extracting the preset credit-limit level corresponding to the preset information; and determining the preset credit-limit level as the credit-limit level of the object.

It can be understood here that the present application stores the preset information in the cloud, which can reduce the storage amount of local storage space, and can also avoid relying on the local storage space. Under network connectivity, it is possible to determine whether the identity information matches the preset information in the cloud anytime and anywhere.

The preset information may refer to information that is preset and used for determining the identity information. For example, the preset information may be represented as a preset unique identifier of the object.

When the identity information is the same as the preset information, such a situation may be referred to as the identity information matching the preset information; when the identity information is different from the preset information, such a situation may be referred to as the identity information not matching the preset information.

When the similarity between the identity information and the preset information is greater than a preset similarity threshold, such a situation may be referred to as the identity information matching the preset information; when the similarity between the identity information and the preset information is less than or equal to the preset similarity threshold, such a situation may be referred to as the identity information not matching the preset information.

In one example, the manner of obtaining the credit-limit level of the object according to the identity information may be: sending a credit-limit-level query request to a data cache area corresponding to the credit-limit processing server through the credit-limit processing server, wherein the credit-limit-level query request carries the identity information; and performing a query processing on the credit-limit level of the object in the data cache area according to the identity information in the credit-limit-level query request, to obtain the credit-limit level of the object.

The credit-limit processing server may refer to a server used for processing information related to the credit limit of the object. The related information may include, but is not limited to, at least one of the credit-limit level and the initial credit limit.

For example, when the object is user B, the identity information may characterize the telephone number of user B. Based on this, after a credit-limit-level query request is sent to the data cache area corresponding to the credit-limit processing server through the credit-limit processing server, the credit-limit level of user B may be queried in the data cache area based on the telephone number of user B carried in the credit-limit-level query request, so as to obtain the credit-limit level of user B.

The computer device may communicate with the credit-limit processing server through the HTTPS protocol.

The data cache area may be a storage area used for temporarily storing the above related information.

In one example, the manner of querying the credit-limit level of the object in the data cache area based on the identity information in the credit-limit-level query request to obtain the credit-limit level of the object may be as follows: querying the credit-limit level of the object in the data cache area based on the identity information in the credit-limit-level query request, if the credit-limit level of the object is not found in the data cache area, requesting the credit-limit level of the object from the cloud through the credit-limit processing server.

It can be understood that the present application may preferably query the credit-limit level of the object in the data cache area first, thereby improving the efficiency of obtaining the credit-limit level. When the credit-limit level of the object is not found in the data cache area, a new manner is selected to obtain the credit-limit level, such as requesting the credit-limit level of the object from the cloud through the credit-limit processing server.

In one example, the manner of requesting the credit-limit level of the object from the cloud through the credit-limit processing server may be as follows: extracting, through the credit-limit processing server, target consumption data of the object within a preset period from an in-memory database corresponding to the credit-limit processing server, requesting the credit-limit level of the object from the cloud based on the target consumption data.

It can be understood that, in the present application, by utilizing the target consumption data of the object within a preset period, the accuracy of obtaining the credit-limit level can be improved.

The in-memory database may refer to a database used at least for long-term storage of the consumption data of the object. The consumption data may include, but is not limited to, at least one of the target consumption data and the historical consumption data.

In one example, the manner of requesting the credit-limit level of the object from the cloud based on the target consumption data may be as follows: sending, through the credit-limit processing server, the target consumption data to the cloud, so that the cloud obtains the credit-limit level of the object based on the target consumption data.

Based on the above, in one example, the cloud may determine the data interval to which the target consumption data belongs, and perform a mapping process on the data interval to obtain the credit-limit level of the object.

The data interval may refer to an interval of data magnitude.

In some embodiments of the present application, the manner of extracting the initial credit limit of the object for the device based on the identity information may be as follows: determining whether the identity information meets preset requirements, and if so, extracting the initial credit limit of the object for the device based on the identity information.

It can be understood that, when the identity information meets the preset requirements, the present application then extracts the initial credit limit of the object for the device, thereby improving the security of obtaining the initial credit limit.

The initial credit limit corresponding to the identity information may be extracted from the cloud based on the identity information, and the initial credit limit corresponding to the identity information may be used as the initial credit limit of the object for the device.

When the identity information is bound to a mobile phone number, or the geographical location of the above device in which the identity information is logged in is a preset valid geographical location, or the identity information is not on a blacklist, or the number of overdue repayments of all historical logged-in users in the device in which the identity information is logged in is not greater than a preset threshold value, such a situation may be referred to as the identity information meeting the preset requirements. When the identity information is not bound to a mobile phone number, or the geographical location of the above device in which the identity information is logged in is not a preset valid geographical location, or the identity information is on a blacklist, or there exists a number of overdue repayments of any historical logged-in user in the device in which the identity information is logged in that is greater than a preset threshold value, such a situation may be referred to as the identity information not meeting the preset requirements.

S204, obtaining the historical consumption data of the object for the device based on the identity information.

In some application embodiments, the way of obtaining the historical consumption data of the object for the device based on the identity information may comprise: determining whether the initial credit limit is less than a preset limit threshold; if yes, obtaining the historical consumption data of the object for the device based on the identity information.

Based on the identity information, the historical consumption data of the object for the device may be extracted from the aforementioned in-memory database.

The historical consumption data may include, within a target time period, voice consumption transaction information of the object, credit compliance transaction information, offline cash transaction information, bank credit inquiry information, and other offline shopping transaction information.

The target time period may be the past six months, or the duration may be set according to circumstances. The transaction information may include transaction amount information and total number of transactions.

S205, performing fusion processing on the historical consumption data and the initial credit limit to generate the credit limit of the object.

Specifically, obtaining a mapping function for the historical consumption data; performing a mapping processing on the historical consumption data according to the mapping function to obtain a credit-limit parameter of the object; performing a fusion operation on the credit-limit parameter and the initial credit limit to obtain the credit limit of the object.

It can be understood that, by fusing the credit-limit parameter with the initial credit limit, the present application can obtain the credit limit of the object more accurately.

The mapping function may be a function used for performing mapping processing on the historical consumption data.

The way of performing a fusion operation on the credit-limit parameter and the initial credit limit to obtain the credit limit of the object may comprise: obtaining a fusion function; performing a fusion operation on the credit-limit parameter and the initial credit limit through the fusion function to obtain the credit limit of the object.

The fusion function may be a function used for performing the fusion operation on the credit-limit parameter and the initial credit limit, and the fusion function may be a custom function.

For example, the credit-limit parameter and the initial credit limit may be added together through the fusion function to obtain the credit limit of the object.

Based on the above, the present application is further described below. Here, the biometric information is taken as the voice of the object as an example for description. It can be understood that, when the biometric information is the voice of the object, the computer device can use the voice of the object to quickly generate the credit limit of the object, thereby avoiding manual operations by the object.

For example, as shown in FIG. 3, the present application may be provided with a computer device, an interface server, a credit-limit processing server, a data cache area, and an in-memory database. The voice acquisition device may be integrated in the computer device, and the interface server may serve as an interface connecting the computer device and the credit-limit processing server.

Specifically, when the computer device obtains the voice of the object through the voice acquisition device, the computer device performs identity recognition on the object according to the biometric information to obtain the identity information of the object; then, the computer device sends the identity information to the credit-limit processing server through the interface server; next, the credit-limit processing server sends a limit-level query request to the data cache area corresponding to the credit-limit processing server, and the limit-level query request carries the identity information; according to the identity information in the limit-level query request, a query processing is performed on the credit-limit level of the object in the data cache area.

If the credit-limit level of the object is queried in the data cache area, the initial credit limit of the object for the device is extracted from the data cache area.

If the credit-limit level of the object is not queried in the data cache area, the credit-limit processing server requests the credit-limit level of the object from the cloud through the credit-limit processing server.

Then, the computer device may extract the initial credit limit corresponding to the credit-limit level through the cloud so as to obtain the initial credit limit of the object for the device. Next, the cloud may send the initial credit limit to the credit-limit processing server. The computer device may obtain the historical consumption data of the object for the device according to the identity information through the credit-limit processing server; the computer device may perform fusion processing on the historical consumption data and the initial credit limit through the credit-limit processing server so as to generate the credit limit of the object. Then, the credit-limit processing server may send the credit limit to the computer device through the interface server.

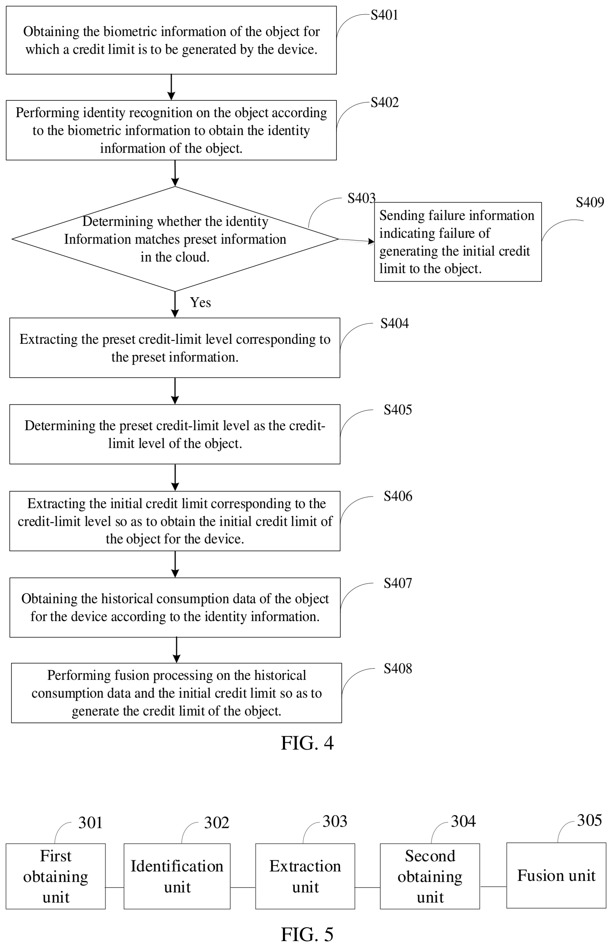

Based on the above, as shown in FIG. 4, the present application is further described, as illustrated in steps S401 to S409:
S401, obtaining the biometric information of the object for which a credit limit is to be generated by the device.

S402, performing identity recognition on the object according to the biometric information to obtain the identity information of the object.

S403, determining whether the identity information matches preset information in the cloud.

If matching, step S404 is executed; if not matching, step S409 is executed.

S404, extracting the preset credit-limit level corresponding to the preset information.

S405, determining the preset credit-limit level as the credit-limit level of the object.

S406, extracting the initial credit limit corresponding to the credit-limit level so as to obtain the initial credit limit of the object for the device.

S407, obtaining the historical consumption data of the object for the device according to the identity information.

S408, performing fusion processing on the historical consumption data and the initial credit limit so as to generate the credit limit of the object.

S409, sending failure information indicating failure of generating the initial credit limit to the object.

The specific implementations of the above operations may refer to the foregoing embodiments, and will not be repeated herein.

The present application may obtain the biometric information of the object for which a credit limit is to be generated by the device; perform identity recognition on the object according to the biometric information to obtain the identity information of the object; extract the initial credit limit of the object for the device according to the identity information; obtain the historical consumption data of the object for the device according to the identity information; and perform fusion processing on the historical consumption data and the initial credit limit so as to generate the credit limit of the object. Since the present application can identify the identity information of the object based on the biometric information of the object, the historical consumption data and the initial credit limit of the object can be obtained based on the identity information. Thus, the credit limit of the object can be generated accurately and automatically based on the historical consumption data and the initial credit limit, thereby improving the efficiency and accuracy of generating the user's credit limit.

In order to better implement the above method, the embodiments of the present application further provide a credit-limit processing device, which may be integrated in a computer device, such as a server or a terminal device, and the terminal may include a tablet computer, a laptop computer, and/or a personal computer, etc.

For example, as shown in FIG. 5, the credit-limit processing device may include a first obtaining unit 301, an identification unit 302, an extraction unit 303, a second obtaining unit 304, and a fusion unit 305, as follows:

An obtaining unit:
The obtaining unit may be used for obtaining the biometric information of the object for which a credit limit is to be generated by the device.

An identification unit:
The identification unit may be used for performing identity recognition on the object according to the biometric information to obtain the identity information of the object.

An extraction unit:
The extraction unit may be used for extracting the initial credit limit of the object for the device according to the identity information.

In some application embodiments, the extraction unit may be used for obtaining the credit-limit level of the object according to the identity information; and extracting the initial credit limit corresponding to the credit-limit level so as to obtain the initial credit limit of the object for the device.

In some application embodiments, the extraction unit may be used for determining whether the identity information matches preset information in the cloud; if matching, extracting the preset credit-limit level corresponding to the preset information; and determining the preset credit-limit level as the credit-limit level of the object.

In some application embodiments, the extraction unit may be used for sending a limit-level query request to a data cache area corresponding to the credit-limit processing server through the credit-limit processing server, wherein the limit-level query request carries the identity information; and performing query processing on the credit-limit level of the object in the data cache area according to the identity information in the limit-level query request so as to obtain the credit-limit level of the object.

In some application embodiments, the extraction unit may be used for performing query processing on the credit-limit level of the object in the data cache area according to the identity information in the limit-level query request; and if the credit-limit level of the object is not queried in the data cache area, requesting the credit-limit level of the object from the cloud through the credit-limit processing server.

In some application embodiments, the extraction unit may be used for extracting target consumption data of the object within a preset time period from a memory database corresponding to the credit-limit processing server through the credit-limit processing server; and requesting the credit-limit level of the object from the cloud according to the target consumption data.

In some application embodiments, the extraction unit may be used for determining whether the identity information meets preset requirements; if so, extracting the initial credit limit of the object for the device according to the identity information.

The second obtaining unit:
The second obtaining unit may be used for obtaining the historical consumption data of the object for the device according to the identity information.

In some application embodiments, the second obtaining unit may be used for determining whether the initial credit limit is less than a preset limit threshold; if so, obtaining the historical consumption data of the object for the device according to the identity information.

The fusion unit:
The fusion unit may be used for performing fusion processing on the historical consumption data and the initial credit limit so as to generate the credit limit of the object.

In some application embodiments, the fusion unit may be used for obtaining a mapping function for the historical consumption data; performing mapping processing on the historical consumption data according to the mapping function to obtain a credit-limit parameter of the object; and performing fusion computation on the credit-limit parameter and the initial credit limit to obtain the credit limit of the object.

As can be seen from the above, the first obtaining unit of the present application may be used for obtaining the biometric information of the object for which a credit limit is to be generated by the device, the identification unit may be used for performing identity recognition on the object according to the biometric information to obtain the identity information of the object, the extracting unit may be used for extracting the initial credit limit of the object for the device according to the identity information, the second obtaining unit may be used for obtaining the historical consumption data of the object for the device according to the identity information, and the fusion unit may be used for performing fusion processing on the historical consumption data and the initial credit limit so as to generate the credit limit of the object. Since the present application can, based on the biometric information of the object, identify the identity information of the object, it is thus possible, based on the identity information, to obtain the historical consumption data and the initial credit limit of the object. Accordingly, based on the historical consumption data and the initial credit limit, an accurate and automatic credit limit can be generated for the object, thereby improving the generation efficiency and generation accuracy of the user's credit limit.

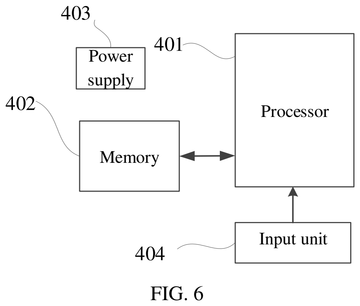

The present application further provides a computer device. As shown in FIG. 6, FIG. 6 illustrates a schematic structural diagram of the computer device involved in the embodiments of the present application, specifically:

The computer device may include a processor 401 having one or more processing cores, a memory 402 having one or more computer-readable storage media, a power supply 403, and an input unit 404, among other components. Those skilled in the art can understand that the structure of the computer device shown in FIG. 6 does not constitute a limitation on the computer device, and may include more or fewer components than those shown, or may combine certain components, or may adopt different component arrangements.

The processor 401 is the control center of the computer device, and connects various parts of the entire computer device through various interfaces and circuits. By running or executing software programs and/or modules stored in the memory 402, and by invoking data stored in the memory 402, the processor 401 performs various functions of the computer device and processes data. Optionally, the processor 401 may include one or more processing cores. Preferably, the processor 401 may integrate an application processor and a modem processor, wherein the application processor mainly processes an operating system, a user interface, and computer programs, and the modem processor mainly processes wireless communications. It can be understood that the modem processor may also not be integrated into the processor 401.

The memory 402 may be used for storing software programs and modules. The processor 401 executes various functional applications and performs data processing by running the software programs and modules stored in the memory 402. The memory 402 may mainly include a program storage area and a data storage area, wherein the program storage area may store an operating system, at least one computer program required for a function (such as a sound playing function, an image playing function, etc.), and the data storage area may store data created according to the use of the computer device. In addition, the memory 402 may include high-speed random access memory, and may also include non-volatile memory, such as at least one disk storage device, flash memory device, or other non-volatile solid-state storage device. Accordingly, the memory 402 may further include a memory controller to provide the processor 401 with access to the memory 402.

The computer device further includes a power supply 403 for supplying power to various components. Preferably, the power supply 403 may be logically connected to the processor 401 through a power management system, so that charging management, discharging management, power consumption management, and other functions can be implemented through the power management system. The power supply 403 may further include any component such as one or more direct-current or alternating-current power sources, a rechargeable system, a power-failure detection circuit, a power converter or inverter, a power-status indicator, and the like.

The computer device may further include an input unit 404, which may be used for receiving input numerical or character information communications, and for generating keyboard, mouse, joystick, optical, or trackball signal inputs related to user settings and function control.

Although not shown, the computer device may further include a display unit and the like, which are not described herein again. Specifically, in the present embodiment, the processor 401 in the computer device will, according to the following instructions, load into the memory 402 the executable file corresponding to the process of one or more computer programs, and the processor 401 will run the computer program stored in the memory 402 so as to implement various functions, as follows:
Obtaining the biometric information of the object for which a credit limit is to be generated by the device, performing identity recognition on the object according to the biometric information to obtain the identity information of the object, extracting the initial credit limit of the object for the device according to the identity information, obtaining the historical consumption data of the object for the device according to the identity information, and performing fusion processing on the historical consumption data and the initial credit limit so as to generate the credit limit of the object.

The specific implementations of the above operations can refer to the foregoing embodiments, and are not repeated here.

Those of ordinary skill in the art can understand that all or part of the steps in the various methods of the above embodiments may be completed by a computer program, or may be completed by controlling related hardware through a computer program. The computer program may be stored in a computer-readable storage medium and loaded and executed by a processor.

To this end, the present application also provides a computer-readable storage medium, on which a computer program is stored. The computer program can be loaded by a processor to execute any of the credit-limit processing methods provided in the embodiments of the present application.

The specific implementations of the above operations can refer to the foregoing embodiments, and are not repeated here.

The computer-readable storage medium may include: a read-only memory (ROM), a random access memory (RAM), a magnetic disk, an optical disk, and the like.

Since the instructions stored in the computer-readable storage medium can execute the steps of any of the credit-limit processing methods provided in the embodiments of the present application, the beneficial effects achievable by any of the credit-limit processing methods provided in the embodiments of the present application can be realized. For details, please refer to the foregoing embodiments, which will not be repeated here.

According to one aspect of the present application, a computer program product or a computer program is provided. The computer program product or computer program includes computer instructions, and the computer instructions are stored in a computer-readable storage medium. The processor of the computer device reads the computer instructions from the computer-readable storage medium, and the processor executes the computer instructions such that the computer device performs the methods provided in the various optional implementations of the embodiments described above.

The credit-limit processing method, apparatus, computer device, computer-readable storage medium, and computer program product provided in the embodiments of the present application have been described in detail above. Specific examples have been used herein to illustrate the principles and implementation manners of the present application. The description of the above embodiments is merely for helping to understand the method of the present application and its core ideas. Meanwhile, for those skilled in the art, modifications may be made to the specific implementation manners and application scopes based on the ideas of the present application. In summary, the content of this specification should not be construed as limiting the present application.

## Claims

1. A credit-limit processing method, comprising:
obtaining a biometric information of an object for which a credit limit is to be generated by a device;
performing an identity recognition on the object based on the biometric information to obtain an identity information of the object;
extracting an initial credit limit of the object for the device based on the identity information;
obtaining a historical consumption data of the object for the device based on the identity information; and
performing a fusion processing on the historical consumption data and the initial credit limit to generate the credit limit of the object.

2. The credit-limit processing method according to claim 1, wherein extracting the initial credit limit of the object for the device based on the identity information comprises:
obtaining a credit-limit level of the object based on the identity information; and
extracting the initial credit limit corresponding to the credit-limit level so as to obtain the initial credit limit of the object for the device.

3. The credit-limit processing method according to claim 2, wherein obtaining the credit-limit level of the object based on the identity information comprises:
determining whether the identity information matches a preset information in a cloud;
if matching, extracting a preset credit-limit level corresponding to the preset information; and
determining the preset credit-limit level as the credit-limit level of the object.

4. The credit-limit processing method according to claim 2, wherein obtaining the credit-limit level of the object based on the identity information comprises:
sending, through a credit-limit processing server, a credit-level query request to a data cache area corresponding to the credit-limit processing server, the credit-level query request carrying the identity information; and
querying the credit-limit level of the object in the data cache area based on the identity information in the credit-level query request so as to obtain the credit-limit level of the object.

5. The credit-limit processing method according to claim 4, wherein querying the credit-limit level of the object in the data cache area based on the identity information in the credit-level query request so as to obtain the credit-limit level of the object comprises:
querying the credit-limit level of the object in the data cache area based on the identity information in the credit-level query request; and
if the credit-limit level of the object is not found in the data cache area, requesting the credit-limit level of the object from a cloud through the credit-limit processing server.

6. The credit-limit processing method according to claim 5, wherein requesting the credit-limit level of the object from the cloud through the credit-limit processing server comprises:
extracting, through the credit-limit processing server, a target consumption data of the object within a preset time period from a memory database corresponding to the credit-limit processing server; and
requesting the credit-limit level of the object from the cloud based on the target consumption data.

7. The credit-limit processing method according to claim 1, wherein extracting the initial credit limit of the object for the device based on the identity information comprises:
determining whether the identity information meets preset requirements; and
if so, extracting the initial credit limit of the object for the device based on the identity information.

8. The credit-limit processing method according to claim 1, wherein obtaining the historical consumption data of the object for the device based on the identity information comprises:
determining whether the initial credit limit is less than a preset credit threshold; and
if so, obtaining the historical consumption data of the object for the device based on the identity information.

9. The credit-limit processing method according to any one of claims 1 to 8, wherein performing the fusion processing on the historical consumption data and the initial credit limit to generate the credit limit of the object comprises:
obtaining a mapping function for the historical consumption data;
performing a mapping processing on the historical consumption data according to the mapping function to obtain a credit-limit parameter of the object; and
performing a fusion operation on the credit-limit parameter and the initial credit limit to obtain the credit limit of the object.

10. The credit-limit processing method according to claim 1, wherein performing identity recognition on the object based on the biometric information to obtain the identity information of the object comprises:
performing the identity recognition on the object according to the biometric information by using an identity recognition model to obtain the identity information of the object; and
wherein the identity recognition model comprises a CNN neural network model or a self-attention neural network model.

11. The credit-limit processing method according to claim 2, wherein obtaining the credit-limit level of the object based on the identity information comprises:
obtaining a correspondence relationship between the identity information and the credit-limit level;
obtaining the credit-limit level corresponding to the identity information according to the identity information and the correspondence relationship; and
taking the credit-limit level corresponding to the identity information as the credit-limit level of the object.

12. The credit-limit processing method according to claim 2, wherein extracting the initial credit limit corresponding to the credit-limit level so as to obtain the initial credit limit of the object for the device comprises:
extracting a preset limit value corresponding to the credit-limit level; and
performing a mapping processing on the preset limit value by using a mapping rule to obtain the initial credit limit corresponding to the credit-limit level so as to obtain the initial credit limit of the object for the device.

13. The credit-limit processing method according to claim 9, wherein performing the fusion operation on the credit-limit parameter and the initial credit limit to obtain the credit limit of the object comprises:
obtaining a fusion function; and
performing a fusion operation on the credit-limit parameter and the initial credit limit through the fusion function to obtain the credit limit of the object.

14. The credit-limit processing method according to claim 1, wherein obtaining the biometric information of the object for which the credit limit is to be generated by the device comprises:
obtaining the biometric information of the object for which the credit limit is to be generated by the device through a biometric-information acquiring device connected to the device; and
wherein the biometric-information acquiring device comprises at least one of a voice acquiring device, a fingerprint acquiring device, or an imaging device.

15. The credit-limit processing method according to claim 1, wherein performing the identity recognition on the object based on the biometric information to obtain the identity information of the object comprises:
matching the biometric information with a preset biometric information; and
if matching, taking a preset identity information corresponding to the preset biometric information as the identity information of the object.

16. A credit-limit processing apparatus, comprising:
a first acquiring unit configured to obtain a biometric information of an object for which a credit limit is to be generated by a device;
an identification unit configured to perform an identity recognition on the object based on the biometric information to obtain an identity information of the object;
an extraction unit configured to extract an initial credit limit of the object for the device based on the identity information;
a second acquiring unit configured to obtain a historical consumption data of the object for the device based on the identity information; and
a fusion unit configured to perform a fusion processing on the historical consumption data and the initial credit limit to generate the credit limit of the object.

17. The credit-limit processing apparatus according to claim 16, wherein the extraction unit is further configured to:
obtain a credit-limit level of the object based on the identity information; and
extract the initial credit limit corresponding to the credit-limit level so as to obtain the initial credit limit of the object for the device.

18. A computer device, comprising a memory and a processor;
wherein the memory stores a computer program, and the processor is configured to run the computer program stored in the memory to execute the credit-limit processing method according to any one of claims 1 to 15.

19. A computer-readable storage medium, wherein the computer-readable storage medium stores a computer program, and the computer program is adapted to be loaded by a processor to execute the credit-limit processing method according to any one of claims 1 to 15.

20. A computer program product, wherein the computer program product stores a computer program, and the computer program is adapted to be loaded by a processor to execute the credit-limit processing method according to any one of claims 1 to 15.
